Europäisches Patentamt

European Patent Office

Office européen des brevets

(19)

(11) Veröffentlichungsnummer: **0 158 244**
**B1**

(12) **EUROPÄISCHE PATENTSCHRIFT**

(45) Veröffentlichungstag der Patentschrift:
07.10.87

(51) Int. Cl.⁴: **A 47 J 41/02**, B 65 D 55/10

(21) Anmeldenummer: **85103800.0**

(22) Anmeldetag: **29.03.85**

(54) **Isoliergefäss, insbesondere Isolierkanne.**

(30) Priorität: **02.04.84 DE 3412208**

(43) Veröffentlichungstag der Anmeldung:
**16.10.85 Patentblatt 85/42**

(45) Bekanntmachung des Hinweises auf die Patenterteilung:
**07.10.87 Patentblatt 87/41**

(84) Benannte Vertragsstaaten:
**AT BE CH DE FR GB IT LI LU NL SE**

(56) Entgegenhaltungen:
**DE - A - 2 054 275**
**DE - B - 1 072 549**
**DE - C - 531 147**
**DE - U - 8 333 674**
**GB - A - 21 052**
**GB - A - 189 710**
**GB - A - 213 089**
**GB - A - 840 287**
**US - A - 1 374 732**
**US - A - 2 866 574**

(73) Patentinhaber: **Rotpunkt Dr. Anso Zimmermann,
Industriestrasse, D-6434 Niederaula / Bad Hersfeld (DE)**

(72) Erfinder: **Zimmermann, Anso, Dr., Seilerweg 34,
D-6430 Bad Hersfeld (DE)**

(74) Vertreter: **Körber, Wolfhart, Dr. et al, Patentanwälte
Dipl.-Ing. H. Mitscherlich Dipl.-Ing. K. Gunschmann
Dr.rer.nat. W. Körber Dipl.Ing. J. Schmidt-Evers Dipl.-Ing.
W. Melzer Steinsdorfstrasse 10,
D-8000 München 22 (DE)**

## Beschreibung

Die Erfindung bezieht sich auf ein Isoliergefäss nach dem Oberbegriff des Anspruchs 1.

Ein Isoliergefäss gemäss Oberbegriff des Anspruches 1 ist im DE-U-8 333 674 beschrieben und dargestellt. Bei dieser bekannten Bauart ist ein Schraubdeckel vorhanden, der einen vertikal verstellbaren Verschlussschieber für die Füllöffnung des Isoliergefässes trägt. Für die Verstellung des Verschlussschiebers ist ein Verstellmechanismus mit einer Handhabe vorgesehen, die aus dem Deckel herausgeführt ist. Die Formschlussverbindung kann dabei auch durch einem Bajonettverschluss gebildet sein.

Die bekannte Bauart funktioniert zufriedenstellend. Als nachteilig kann angesehen werden, dass zum Lösen des Deckels dieser geschraubt werden muss, was mit einem gewissen Zeitaufwand und Aufmerksamkeit verbunden ist. Einer Aufmerksamkeit bedarf es insbesondere dann, wenn der Deckel eingeschraubt werden soll, wobei die Aufmerksamkeit darauf zu richten ist, dass die Gewindegänge sich finden. Insofern kann die Handhabung der bekannten Ausführungsform als erschwert angesehen werden.

Der Erfindung liegt die Aufgabe zugrunde, das Isoliergefäss so auszugestalten, dass der Deckel durch einfache und leichte Handhabung an dem Isoliergefäss fixiert werden kann.

Diese Aufgabe wird durch die kennzeichnenden Merkmale der Ansprüche 1 oder 2 gelöst.

Der wesentliche Vorteil der erfindungsgemässen Ausgestaltungen besteht darin, dass es zum Verschliessen des Isoliergefässes mit dem Deckel keines Schraubens des Deckels bedarf, so dass das beim Vorhandensein eines Gewindes erschwerte Ansetzen des deckelseitigen Gewindes entfällt. Bei der erfindungsgemässen Ausgestaltung braucht der Deckel lediglich aufgesetzt und verrastet zu werden. Dabei ist keine Undichtigkeit des Verschlusses zu befürchten, weil der Schliessdruck nicht wie beim Stand der Technik durch ein Gewinde am Deckel, sondern durch einen besonderen Verschlussschieber aufgebracht wird. Ausserdem führt die erfindungsgemässe Ausgestaltung zu einer leichten Handhabung des Deckels beim Öffnen und Schliessen.

Gemäss Anspruch 1 ist die zum Verrasten des Deckels notwendige Handhabe auf der zur Schnaupe gerichteten Seite des Deckels und in der Nähe seines Umfangs angeordnet. Diese Ausgestaltung ermöglicht es, die Handhabe beispielsweise mit dem Zeigefinger der Bedienungshand leicht zu betätigen, wobei der Deckel zwischen dem Daumen und weiteren Fingern gehalten werden kann. Die angestrebte leichte Handhabung ermöglicht auch die Ausgestaltung nach Anspruch 2, bei der der Deckel diametral ergriffen und gleichzeitig verrastet bzw. gelöst werden kann, und zwar in einer Stellung, in der die Handhabe günstig zur Bedienungshand steht.

Er ist zwar aus der US-A-1 374 732 an sich bekannt, einen Deckel für einen Behälter durch zwei einander gegenüberliegende, radial bewegliche Verrastungsnasen zu befestigen, die in ihrer Verrastungsstellung Verrastungsflächen am Gehäuse des Behälters hintergreifen, jedoch kein Hinweis auf die erfindungsgemässen handhabungsfreundlichen Anordnungen der Betätigungshandhaben für die beweglichen Verrastungsnasen zu entnehmen.

Die in den Ansprüchen 3 bis 5 angeführten Ausgestaltungsmerkmale sind ebenfalls aus ergonomischen Gründen vorteilhaft. Da es zum manuellen Halten des Griffs schon eines radial einwärts gerichteten Druckes auf den Deckel bedarf, ist es gemäss Anspruch 3 vorteilhaft, diesen Druck auch zur Betätigung der Handhabe zu benutzen.

Die Ausbildungen nach den Ansprüchen 6 und 7 ergeben einfache und preisgünstig herstellbare Bauteile, die sicher funktionieren und auch leicht zu bedienen sind.

Wenn die bewegliche Verrastungsnase gemäss den Ansprüchen 8 und 9 beaufschlagt bzw. ausgebildet ist, bedarf es zum Schliessen des Isoliergefässes mit dem Deckel lediglich eines Druckes auf den Deckel, wobei die bewegliche Verrastungsnase oder -nasen automatisch einschnappen. Wenn nur eine bewegliche Verrastungsnase vorhanden ist, bedarf es beim Aufsetzen des Deckels einer Aufmerksamkeit dahingehend, dass die nicht bewegliche Verrastungsnase in Hintergreifstellung zu bringen ist. Wenn nur bewegliche Verrastungsnasen vorhanden sind, bedarf es einer solcher Aufmerksamkeit nicht.

Die Ausgestaltung nach Anspruch 10 ermöglicht in vorteilhafter Weise die Ausbildung einer gehäuseseitigen Verrastungsfläche im Bereich der Schnaupe.

Die Ausgestaltung nach Anspruch 11 baut auf einer bewährten Konstruktion auf, die einfach und funktionsgünstig ist und die ebenfalls die Handhabung erleichtert. Die erfindungsgemässe Ausgestaltung ermöglicht eine Zentrierung des Deckels in der gehäuseseitigen Ausnehmung, bevor die beweglichen Verrastungsnasen in ihre Verrastungspositionen übergehen.

Wenn die erste Handhabe exzentrisch aus dem Deckel herausgeführt ist, empfehlen sich die Ausführungen nach den Ansprüchen 12 bis 14, um dem Betätigungsglied am Deckel eine immer gleiche Funktionsstellung zu geben und gleichzeitig eine einfache und leichte Handhabung zu ermöglichen.

Bei der Ausgestaltung nach Anspruch 15 erfolgt das Schliessen der Füllöffnung automatisch durch eine Federkraft deren Grösse vorbestimmt werden kann und die dann immer gleich ist. Bei der Vorbestimmung können die vorhandenen Werkstoffeigenschaften, die erwünschte Flächenpressung am Verschluss und auch ein zu erwartender Dampfdruck Berücksichtigung finden, so dass die Schliesskraft, mit der der Verschlussschieber die Füllöffnung schliesst, optimal bemessen werden kann. Eine unsachgemässe Behandlung beim Schliessen der Füllöffnung ist nicht zu erwarten, weil es in dieser Bewegungsrichtung des Verschlussschiebers allenfalls einer Auslösung der automatischen Verschlussbewegung bedarf.

Es empfiehlt sich im Sinne einer vereinfachten Handhabung, den Verstellmechanismus gemäss Anspruch 16 auszubilden, so dass es keiner manuellen Rückführung des Verstellmechanismus in seine Ausgangsposition bedarf.

Die Ausgestaltung nach Anspruch 17 ermöglicht weitere Vereinfachungen der Handhabung, die zum einen darin gesehen werden kann, dass die Kanne mit der zweiten Bedienungshand nicht übergriffen zu werden braucht. Es wird eine sogenannte Einhandbedienung ermöglicht, bei der das Betätigungsglied des Verstellmechanismus durch einen Finger der Hand betätigt werden kann, die in den Griff der Kanne einfasst. Zum anderen ist die Handhabung deshalb vereinfacht, weil das Betätigungsglied mit dem Daumen dieser Bedienungshand bequem und leicht in Richtung auf den Griff heruntergedrückt werden kann.

Nachfolgend werden zwei Ausführungsbeispiele der Erfindung anhand einer vereinfachten Zeichnung beschrieben.

Es zeigen:

Fig. 1 eine erfindungsgemäss ausgestaltete Isolierkanne mit einem aus einem Deckeloberteil und einem Deckelunterteil bestehenden Deckel im lotrechten Teilschnitt als erstes Ausführungsbeispiel;

Fig. 2 eine Draufsicht auf die Isolierkanne ohne dem Deckeloberteil;

Fig. 3 eine Unteransicht des Deckels aus Fig. 1;

Fig. 4 einen Deckel als zweites Ausführungsbeispiel in der Seitenansicht;

Fig. 5 den Deckel nach Fig. 4 in der Unteransicht;

Fig. 6 einen Teilschnitt nach Linie VII-VII in Fig. 4.

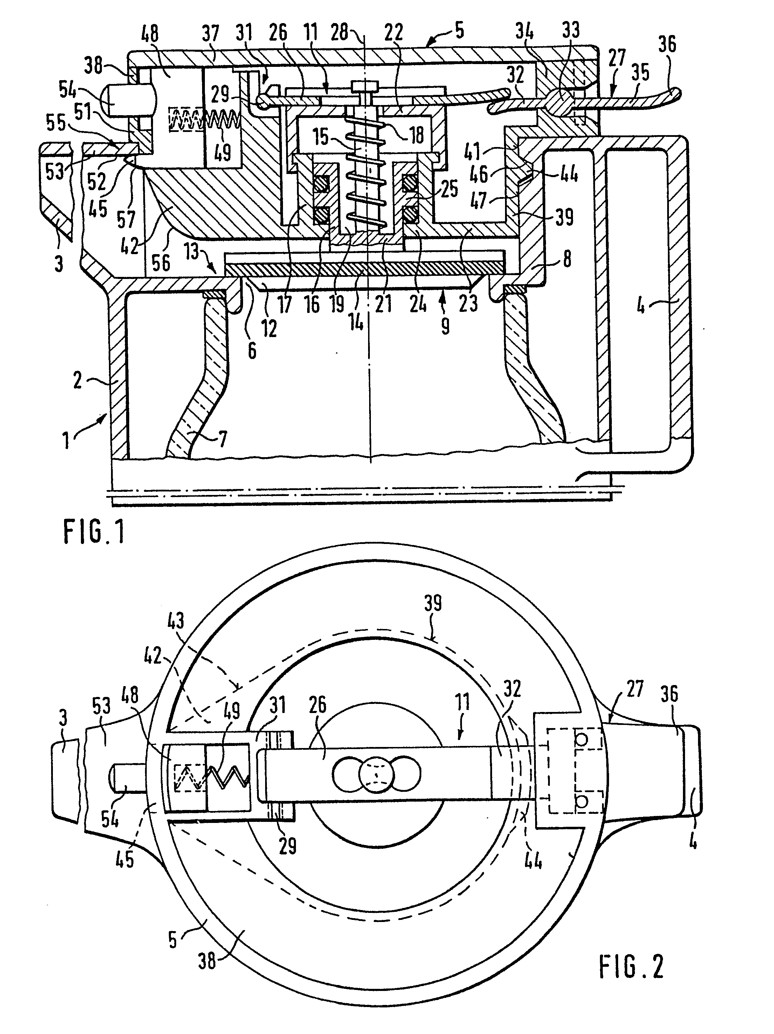

Bei dem in Fig. 1 allgemein mit 1 bezeichneten Isoliergefäss handelt es sich um eine Isolierkanne mit einem Schutzgehäuse 2, an das einstückig eine Schnaupe 3 und ein Griff 4 angeformt sind, mit einem Deckel 5, mit dem eine Füllöffnung 6 verschliessbar ist, und mit einem Isolierglaseinsatz 7, der in bekannter Weise dichtend gegen die Unterseite eines Stutzens 8 des Schutzgehäuses 2 gespannt ist.

Die Füllöffnung 6 ist in der dargestellten Position durch einen Verschlussschieber 9 verschlossen, der im Deckel 5 vertikal geführt ist und mittels eines allgemein mit 11 bezeichneten Verstellmechanismus zwischen der dargestellten Schliessstellung und einer Öffnungsstellung verschiebbar ist. Der Verschlussschieber 9 besteht aus einer Ventilplatte 12, die eine mit dem Öffnungsrand 13 zusammenwirkende Flachdichtung 14 trägt, und einem Schaft 15, der mittelbar durch einen ihn umgebenden Führungsring 16 in einem deckelseitigen, äusseren Führungszylinder 17 vertikal verschiebbar geführt ist. Der Verschlussschieber 9 ist durch eine Druckfeder 18 in Richtung auf den Öffnungsrand 13 vorgespannt, die in einem sich zwischen dem Schaft 15 und dem Führungsring 16 befindlichen Hohlraum 19 angeordnet ist, und sich verschlussschieberseitig an einem Boden 21 des Schaftes 15 und deckelseitig an einem Widerlager 22 abstützt. Die Ausschubbewegung des Veschlussschiebers 9 wird durch einen vom Deckelboden 23 gebildeten Anschlag 24 begrenzt, der mit einer Schulter 25 des Führungsringes 16 zusammenwirkt.

Der allgemein mit 11 bezeichnete Verstellmechanismus wird durch einen einarmigen Hebel 26 und einen zweiarmigen Hebel 27 gebildet. Der einarmige Hebel 26 ist in seinem mittleren Bereich mit dem Schaft 15 verbunden und an seinem in der Verschliessstellung des Deckels 5 der Schnaupe 3 zugewandten Ende um eine quer zur Deckelachse 28 verlaufende Schwenkachse 29 schwenkbar in einem Lager 31 des Deckels 5 gelagert. Mit seinem freien Ende übergreift der einarmige Hebel 26 den inneren Hebelarm 32 des zweiarmigen Hebels 27, der mittels einer Schwenkachse 33 in der gleichen Ebene schwenkbar in einem Lager 34 gelagert ist. Der zweiarmige Hebel 27 durchfasst die Wand 47 des hohlen Deckels 5 und bildet mit seinem äusseren Hebelarm 35 eine erste Handhabe 36, mit der der Verschlussschieber 9 entgegen der Kraft der Druckfeder 18 angehoben werden kann, und zwar durch senkrechtes Herunterdrücken der Handhabe 36. Sobald das Betätigungsglied 36 losgelassen wird, drückt die Druckfeder 18 den Verschlussschieber 9 wieder in seine dargestellte Verschlussstellung zurück.

Der Deckel 5 besteht aus einem Deckeloberteil 37 und einem Deckelunterteil 38, die in nicht dargestellter Weise aneinander lösbar befestigt sind. Hierdurch ist die Montage bzw. Demontage des Verstellmechanismus 11 im hohlen Deckel 5 gewährleistet.

Die vorbeschriebenen Ausführungen machen deutlich, dass der Deckel 5 nur mittelbar durch den Verschlussschieber 9 zum Verschliessen der Füllöffnung 6 beiträgt. Er ist nur Träger des eigentlichen Verschlussgliedes, nämlich des Verschlussschiebers 9.

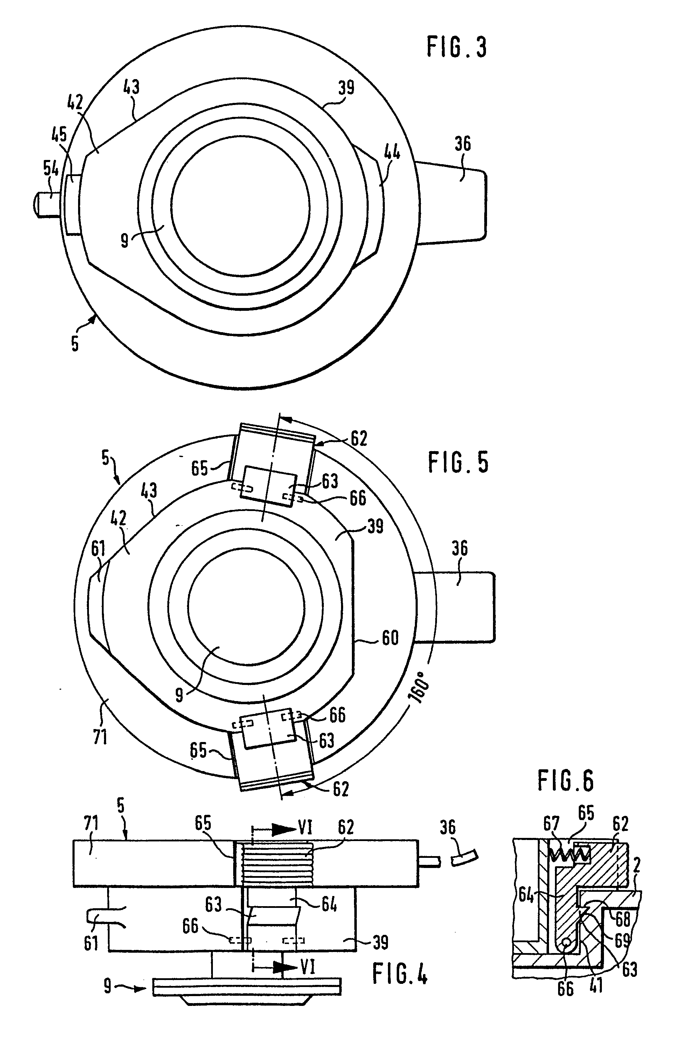

Der Deckel 5 weist unterseitig einen prismatischen Ansatz 39 auf, der etwa schliessend in einer oberseitigen Ausnehmung 41 des Schutzgehäuses 2 einfasst. Im horizontalen Querschnitt sind der Ansatz 39 und die Ausnehmung 41 tropfenförmig geformt, was in der Fig. 2 gestrichelt und in der Fig. 3 mit durchgehenden Linien dargestellt ist. Aufgrund dieser Formgebung ist der Deckel 5 in seiner dargestellten Funktionsstellung gesichert, d.h. er kann sich in Umfangsrichtung nicht verstellen. Die unrunde Querschnittsform des Ansatzes 39 wird durch einen seitlichen Vorsprung 42 am Ansatz 39 gebildet, der seitlich durch tangential am Ansatz 39 auslaufende und radial auswärts konvergierende Flächen 43 begrenzt wird. Die Ausnehmung 41 ist entsprechend geformt, so dass der Ansatz 39 etwa schliessend in sie einfasst.

Der Deckel 5 ist durch eine unbewegliche Verrastungsnase 44 und eine bewegliche Verrastungsnase 45 in der Ausnehmung 41 festgelegt. Beide Verrastungsnasen 44, 45 springen vom Umfang des Ansatzes 39 vor. Die unbewegliche Verrastungsnase 44 hinterfasst eine Verrastungsfläche 46, die durch eine Nut in der Wand 47 der Ausnehmung 41 gebildet ist. Die Verrastungsnase 44 ist am Vorsprung 42 und auf der zum Griff 4 weisenden Seite des Deckels 5 angeordnet, wenn dieser sich auf der Isolierkanne befindet.

Die bewegliche Verrastungsnase 45 ist an einem horizontal und radial im Deckel 5 verschiebbaren Schieber 48 befestigt, der durch eine Druckfeder 49 radial auswärts gegen die Wand 51 des Deckelunterteils 38 vorgespannt ist. Die Anordnung ist so getroffen, dass bei Anlage des Schiebers 48 an der Wand 51 die Verrastungsnase 45 sich in ihrer dargestellten Verrastungsstellung befindet, so dass in der Betriebsstellung die Verrastungsnase 45 eine gehäuseseitige Verrastungsfläche 52 zu untergreifen vermag. Die Verrastungsfläche 52 ist die Unterseite einer durch eine geschlossene Schnaupe 3 gebildete Deckwand 53. Der Schieber 48 ist mit einer Handhabe 54 in Form einer Drucktaste versehen, die sich vom Schieber 48 radial auswärts erstreckt, die Wand 51 des Deckelunterteils 38 in einem Durchbruch durchfasst und um ein bestimmtes Mass aus dem Deckel 5 herausragt. Durch manuellen Druck auf die Handhabe 54 und daraus folgender Verschiebung des Schiebers 48 kann die allgemein mit 55 bezeichnete Verrastung gelöst werden. Anschliessend kann der schnaupenseitige Teil des Deckels 5 angehoben und der Deckel 5 dann so nach oben entfernt werden, dass die unbewegliche Verrastungsnase 44 aus der die Verrastungsfläche 46 bildenden Ausnehmung gezogen wird. Durch eine mondsichelförmige Abschrägung 56 oder Abrundung an der der unbeweglichen Verrastungsnase abgewandten Seite des Ansatzes 39 ist das Verkanten des Deckels 5 in der Ausnehmung 41 möglich.

Zum Schliessen des Deckels 5 wird umgekehrt verfahren. Es wird zunächst der der Schnaupe 3 abgewandte Teil des Deckels so in die Ausnehmung 41 eingesetzt, dass die unbewegliche Verrastungsnase 44 die Verrastungsfläche 46 hinterfasst. Anschliessend kann der schnaupenseitige Teil des Deckels herabgesenkt werden, wobei durch vertikalen Druck auf den Deckel 5 die bewegliche Verrastungsnase 45 aufgrund einer unterseitigen Abschrägung 57 beim Auftreffen auf die Deckwand 53 automatisch eingeschoben wird und unterhalb der Verrastungsfläche 52 automatisch einschnappt.

Die Handhabe 54 kann durch einen Finger der Bedienungshand, beispielsweise durch den Zeigefinger bequem und einfach bedient werden. Dabei können der Daumen und die restlichen Finger den Deckel 5 auf einander gegenüberliegenden Seiten ergreifen.

Beim zweiten Ausführungsbeispiel gemäss Fig. 4 bis 6 ist im Gegensatz zum ersten Ausführungsbeispiel die hier mit 61 bezeichnete unbewegliche Verrastungsnase auf der der Schnaupe 3 zugewandten Seite des Deckels 5 am Vorsprung 42 angeordnet. Ausserdem sind zwei Handhaben 62 für bewegliche Verrastungsnasen 63 vorgesehen, die am Umfang des Deckels 5 zwischen dem Griff 4 und der Schnaupe 3 angeordnet sind. Die Handhaben 62 sind durch einarmige Hebel 64 gebildet, die jeweils in einer Ausnehmung 65 des Deckels 5 um eine untere tangentiale Schwenkachse 66 schwenkbar sind. Die Handhaben 62 bzw. die beweglichen Verrastungsnasen 63 sind ebenfalls durch eine Druckfeder 67 in ihre Verrastungsstellung vorgespannt. In dieser Stellung hinterfassen die beweglichen Verrastungsnasen 63 jeweils eine Verrastungsfläche 68 im Schutzgehäuse 2.

Die Handhaben 62 schliessen einen zum Griff 4 hin offenen Winkel w von etwa 160° ein.

Beim zweiten Ausführungsbeispiel ist der Ansatz 39 auf seiner der Verrastungsnase 61 abgewandten Seite durch eine Abflachung 60 unrund. Die Ausnehmung 41 ist entsprechend geformt.

Die Handhabung des Deckels 5 nach dem zweiten Ausführungsbeispiel ist insofern einfacher, weil der Deckel 5 nur an zwei (etwa einander gegenüberliegenden) Stellen erfasst zu werden braucht, während er beim ersten Ausführungsbeispiel an drei Stellen zu ergreifen ist. Zum Schliessen des Deckels wird dieser so schräg eingesetzt, dass die unbewegliche Verrastungsnase 61 unter die Deckwand 53 der Schnaupe 3 zu fassen vermag. Anschliessend wird die der Schnaupe 3 abgewandte Seite des Deckels 5 herabgesenkt, wobei durch Ausübung eines senkrechten Druckes von oben die beweglichen Verrastungsnasen 63 aufgrund unterseitiger Abschrägungen 69 und der Druckfeder 67 automatisch einrasten.

Der vorliegende Deckel 5 ist ein sogenannter Stufendeckel, d.h. er weist einen Flansch 71 auf, der auf der Oberseite des Schutzgehäuses 2 aufliegt. Die zweiten Handhaben 62 sind der sich dadurch ergebenden Aussenkontur des Deckels 5 angepasst und haben deshalb die Form eines Winkels, dessen einer Schenkel von der Schwenkachse 66 durchgriffen ist und die bewegliche Verrastungsnase 63 trägt, und dessen anderer Schenkel sich zum Umfang des Flansches 71 hin erstreckt. Die Druckfedern 67 winken auf die Innenseiten der Handhaben 62. In der in Fig. 6 dargestellten Stellung, der Verrastungsstellung überragen die Handhaben 62 den Umfang des Deckels 5. Es ist natürlich auch möglich, die Anordnung so zu treffen, dass die Handhaben 62 in der Verrastungsstellung mit dem Umfang des Deckels 5 abschliessen. In einem solchen Fall sollten die die Handhaben 62 aufnehmenden Ausnehmungen 65 so gross bemessen sein, dass der jeweilige auf die Handhabe 62 wirkende Finger in die Ausnehmung 65 einzutauchen vermag.

## Patentansprüche

1. Isoliergefäss insbesondere Isolierkanne, bestehend aus einem Gehäuse (2) mit einem Griff (4), einer Füllöffnung, einen Schnaupe (3) und einem Deckel (5), der durch eine Formschlussverbindung am Gehäuse (2) festlegbar ist und der bevorzugt einen mit der Füllöffnung zusammenwirkenden Verschlussschieber (9) trägt, der durch einen ein Betätigungsglied 36 aufweisenden, durch den Deckel (5) hindurchgeführten Verstellmechanismus (11) zwischen einer Schliessstellung und einer Öffnungsstellung vertikal verschiebbar ist, dadurch gekennzeichnet, dass die Formschlussverbindung durch wenigstens zwei durch radiale Verlagerung in ihre Verrastungsstellung bringbare und in der Verrastungsstellung Verrastungsflächen (46, 52) am Gehäuse (2) hintergreifende Verrastungsnasen (44, 45) gebildet ist, die am Deckel (5) einander gegenüberliegend oder sternförmig angeordnet sind und von denen wenigstens eine (45) durch das Betätigen einer Handhabe (54) ausser Eingriff bringbar ist, die auf der zur Schnaupe (3) gerichteten Seite des Deckels (5) und in der Nähe seines Umfangs angeordnet ist.

2. Isoliergefäss nach dem Oberbegriff des Anspruchs 1, dadurch gekennzeichnet, dass die Formschlussverbindung durch wenigstens zwei durch radiale Verlagerung in ihre Verrastungsstellung bringbare und in der Verrastungsstellung Verrastungsflächen (52, 68) am Gehäuse (2) hintergreifende Verrastungsnasen (45, 61, 63) gebildet ist, die am Deckel (5) einander gegenüberliegend oder sternförmig angeordnet sind und von denen wenigstens eine (63) durch das Betätigen einer Handhabe (62) ausser Eingriff bringbar ist, die auf einer Seite des Deckels (5) und in dessen Umfangsnähe angeordnet ist und in der Verrastungsstellung etwa mittig zwischen der Schnaupe (3) und dem Griff (4) zu liegen kommt, und dass bevorzugt die unbewegliche Verrastungsnase (61) auf der zur Schnaupe (3) weisenden Seite des Deckels (5) angeordnet ist.

3. Isoliergefäss nach Anspruch 1 oder 2, dadurch gekennzeichnet, dass die Handhabe (54, 62) vertikal oder horizontal beweglich ist.

4. Isolierkanne nach Anspurch 2 oder 3, dadurch gekennzeichnet, dass auf der anderen Seite des Deckels (5) etwa mittig zwischen der Schnaupe (3) und dem Griff (4) und in Umfangsnähe eine weitere horizontal bewegliche Handhabe (62) für eine weitere bewegliche Verrastungsnase (63) angeordnet ist.

5. Isoliergefäss nach einem der Ansprüche 1 bis 4, dadurch gekennzeichnet, dass eine radiale Einwärtsbewegung oder eine vertikale Abwärtsbewegung der Handhabe (54, 62) eine Bewegung der Verrastungsnase (45, 63) aus ihrer Verrastungsstellung veranlasst.

6. Isoliergefäss nach einem der Ansprüche 1 bis 5, dadurch gekennzeichnet, dass die bewegliche Verrastungsnase (45) und die Handhabe (54) an einem radial verschieblichen Schieber (48) befestigt, insbesondere einstückig angeformt sind.

7. Isoliergefäss nach einem der Ansprüche 2 bis 5, dadurch gekennzeichnet, dass die bewegliche Verrastungsnase (63) und die Handhabe (62) an einem einarmigen Hebel (64) angeordnet sind.

8. Isoliergefäss nach einem der Ansprüche 1 bis 7, dadurch gekennzeichnet, dass die bewegliche Verrastungsnase (45, 63) durch eine Federkraft in Richtung auf ihre Verrastungsstellung beaufschlagt ist.

9. Isoliergefäss nach Anspurch 8, dadurch gekennzeichnet, dass die der gehäuseseitigen Verrastungsfläche (52, 68) abgewandte Flanke der beweglichen Verrastungsnase (45, 63) abgeschrägt ist.

10. Isoliergefäss nach einem der Ansprüche 1 bis 9, dadurch gekennzeichnet, dass eine der Verrastungsnasen (44, 45, 61, 63) auf der zur Schnaupe (3) gerichteten Seite des Deckels (5) angeordnet ist, die Schnaupe eine wenigstens teilweise geschlossene Schnaupe (3) ist, und die gehäuseseitige Verrastungsfläche (52) an der Deckwand (53) der geschlossenen Schnaupe (3) ausgebildet ist.

11. Isoliergefäss nach einem der Ansprüche 1 bis 10, dadurch gekennzeichnet, dass der Deckel (5) mit einem unterseitigen Ansatz (39) in eine oberseitige Ausnehmung (41) des Gehäuses (2) fasst, die Verrastungsnasen (44, 45, 61, 63) am Umfang des Ansatzes (39) angeordnet sind und die gehäuseseitigen Verrastungsflächen (46, 52, 68) durch Ausnehmungen in der Wand (47) der Ausnehmung (41) gebildet sind.

12. Isoliergefäss nach einem der Ansprüche 1 bis 11, dadurch gekennzeichnet, dass der Deckel (5) mit einem unterseitigen Ansatz (39) in eine Ausnehmung (41) des Gehäuses (2) fasst und durch eine im horizontalen Querschnitt unrunde Form des Ansatzes (39) und der Ausnehmung (41) in Umfangsrichtung in seiner Funktionsstellung gesichert ist.

13. Isoliergefäss nach Anspruch 12, dadurch gekennzeichnet, dass die unrunde Form durch wenigstens eine Abflachung (60) des runden Querschnitts des Ansatzes (39) und der Ausnehmung (41) gebildet ist.

14. Isoliergefäss nach Anspruch 12, dadurch gekennzeichnet, dass die unrunde Form des Ansatzes (39) durch einen Vorsprung (42) gebildet ist, der auf der zur Schnaupe (3) weisenden Seite des Ansatzes (39) angeordnet ist, durch zwei zur Schnaupe (3) konvergierende Seitenflächen (43) begrenzt ist und an dem eine bewegliche oder unbewegliche Verrastungsnase (45, 61) angeordnet ist.

15. Isoliergefäss nach einem der Ansprüche 1 bis 14, dadurch gekennzeichnet, dass der Verschlussschieber (9) durch die Kraft einer Feder (18) in Richtung auf seine Schliessstellung vorgespannt und in seiner Öffnungsstellung entgegen der Kraft der Feder (18) durch den Verstellmechanismus (11) haltbar ist.

16. Isoliergefäss nach Anspruch 15, dadurch gekennzeichnet, dass das Betätigungsglied (36) des Verstellmechanismus (11) durch die Feder (18) automatisch in seine Schliessstellung zurückstellbar ist.

17. Isoliergefäss nach einem der Ansprüche 1 bis 16, dadurch gekennzeichnet, dass das Betätigungsglied (36) des Verstellmechanismus (11) seitlich aus dem Deckel (5) herausgeführt ist, dass das Betätigungsglied (36) oberhalb des Griffs (4) angeordnet ist und bis in den Fingerabstandsbereich am Griff (4) reicht und dass das Betätigungsglied (36) bei seiner etwa vertikalen Abwärtsbewegung den Verschlussschieber (9) öffnet.

**Claims**

1. An insulating vessel, more particularly an insulating jug, comprising a housing (2) having a handle (4), a filling opening, a spout (3) and a lid (5) which can be secured in position on the housing (2) by means of a form-locked connection and which preferably carries a closure member (9) which cooperates with the filling opening and is vertically displaceable between a closed position and an open position by a displacing mechanism (11) which has an operating member (36) and which extends through the lid (5), characterized in that the form-locked connection is formed by at least two locking lugs (44, 45) which can be put in their locking position by radial displacement and which, in their locking position, engage behind locking faces (46, 52) on the housing (2), and which are arranged opposite each other or radially on the lid (5), and at least one (45) of which can be disengaged by operating a member (54), said member being arranged on the side of the lid (5) close to its periphery and facing the spout (3).

2. An insulating vessel according to the preamble of claim 1, characterized in that the form-locked connection is formed by at least two locking lugs (45, 61, 63) which can be put in their locking position by radial displacement and which, in their locking position, engage behind locking faces (52, 68) on the housing (2), and which are arranged opposite each other or radially on the lid (5), and at least one (63) of which can be disengaged by operating a member (62), said member being arranged in the side of the lid (5) close to its periphery and, in the locking position, substantially midway between the spout (3) and the handle (4), and the fixed locking lug (61) is preferably arranged on the side of the lid (5) which faces the spout (3).

3. An insulating vessel according to claim 1 or 2, characterized in that the operating member (54, 62) is movable vertically or horizontally.

4. An insulating jug according to claim 2 or 3, characterized in that another horizontally movable operating member (62) is arranged on the other side of the lid (5) substantially midway between the spout (3) and the handle (4) and close to the periphery for another movable locking lug (63).

5. An insulating vessel according to one of claims 1 or 4, characterized in that a radial, inward movement or a vertical, downward movement of the operating member (54, 62) causes the locking lug (45, 63) to move out of its locking position.

6. An insulating vessel according to one of claims 1 or 5, characterized in that the movable locking lug (45) and the operating member (54) are attached to, more particularly formed integrally to, a radially displaceable slide (48).

7. An insulating vessel according to one of claims 2 to 5, characterized in that the movable locking lug (63) and the operating member (62) are arranged on a one-armed lever (64).

8. An insulating vessel according to claim 1 to 7, characterized in that the movable locking lug (45, 63) is acted upon by spring tension in the direction of its locking position.

9. An insulating vessel according to claim 8, characterized in that the flank of the movable locking lug (45, 63) remote from the locking face (52, 68) on the housing side is bevelled.

10. An insulating vessel according to one of claims 1 to 9, characterized in that one of the locking lugs (44, 45, 61, 63) is arranged on the side of the lid (5) which faces the spout (3), the spout is at least partly closed, and the locking face (52) on the side of the housing is developed on the cover wall (53) of the closed spout (3).

11. An insulating vessel according to claims 1 to 10, characterized in that the lid (5) engages, by means of an extension (39) on its underside, in a recess (41) in the top of the housing (2), the locking lugs (44, 45, 61, 63) are arranged on the periphery of the extension (39), and the locking faces (46, 52, 68) on the side of the housing are formed by recesses in the wall (47) of the recess (41).

12. An insulating vessel according to one of claims 1 to 11, characterized in that the lid (5) engages, by means of an extension (39) on its underside, in a recess (41) in the housing (2) and that the non-round shape (in horizontal cross-section) of the extension (39) and of the recess (41) secures it in a circumferential direction in its functional position.

13. An insulating vessel according to claim 12, characterized in that the non-round shape is formed by at least one flattened portion (60) of the round cross-section of the extension (39) and the recess (41).

14. An insulating vessel according to claim 12, characterized in that the non-round shape of the extension (39) is formed by a projection (42) arranged on the side of the extension (39) that faces the spout (3), is defined by two lateral faces (43) which converge towards the spout (3), and on which there is arranged a movable or fixed locking lug (45, 61).

15. An insulating vessel according to claims 1 to 14, characterized in that the closure member (9) is prestressed by the force of a spring (18) in the direction of its closed position, and, in its open position, can be held against the force of the spring (18) by the displacement mechanism (11).

16. An insulating vessel according to claim 15, characterized in that the operating member (36) of the displacement mechanism (11) is automatically returned by the spring (18) into its closed position.

17. An insulating vessel according to one of claims 1 to 16, characterized in that the operating member (36) of the displacement mechanism (11) is brought out sideways from the lid (5), that the operating member (36) is arranged above the handle (4) and extends to within finger reach from the handle (4), and that the substantially vertical downwand movement of the operating member (36) opens the closure member (9).

**Revendications**

1. Récipient isolant, en particulier pot isolant, constitué par un corps (2) muni d'une poignée (4), une ouverture de remplissage, un bec (3) et un couvercle (5) qui peut être fixé au corps (2) grâce à une liaison en forme, et qui porte de préférence un coulisseau de fermeture (9) qui coopère avec l'ouverture de remplissage, peut coulisser verticalement entre une position de fermeture et une position d'ouverture au moyen d'un mécanisme de réglage (11), passe à travers le couvercle (5) et qui présente un organe d'actionnement (36) caractérisé en ce que la liaison en forme est constituée d'au moins deux dents d'encliquetage (44, 45) qui peuvent être mises en position d'encliquetage par une disposition radiale, qui, en position d'encliquetage, sont engagées derrière des surfaces (46, 52) situées sur le corps (2), qui sont disposées sur le couvercle en face d'une de l'autre ou en étiole, et dont au moins une (45), peut être dégagée par l'actionnement d'une manette (54) qui est disposée du côté du couvercle (5) tourné vers le bec (3) et à proximité de son pourtour.

2. Récipient isolant selon le préambule de la revendication 1, caractérisé en ce que la liaison par la forme est constituée d'au moins deux dents (45, 61, 63) qui peuvent être mises en position d'encliquetage par une disposition radiale, qui, dans cette position, sont engagées derrière des surfaces (52, 68) et sont disposées sur le couvercle en face l'une de l'autre ou en étoile, et dont au moins une (63) peut être dégagée par l'actionnement d'une manette (62) qui est disposée d'un côté du couvercle (5) et à proximité de son pourtour et qui, en position d'encliquetage, vient se placer à peu près au milieu entre le bec (3) et la poignée, et en ce que de préférence, la dent d'encliquetage fixe (61) est disposée sur le côté du couvercle (5) tourné vers le bec (3).

3. Récipient isolant selon la revendication 1 ou 2, caractérisé en ce que la manette (54, 62) peut se déplacer verticalement ou horizontalement.

4. Récipient isolant selon la revendication 2 ou 3, caractérisé en ce que de l'autre côté du couvercle (5) à peu près au milieu entre le bec (3) et la poignée (4) et à proximité du pourtour, est disposée une autre manette (62) pouvant se déplacer horizontalement, destinée à une autre dent d'encliquetage mobile (63).

5. Récipient isolant selon l'une des revendications 1 à 4, caractérisé en ce qu'un mouvement radial vers l'intérieur ou un mouvement vertical vers l'extérieur de la manette (54, 62) provoque un mouvement de la dent d'encliquetage (45, 63) hors de sa position d'encliquetage.

6. Récipient isolant selon une des revendications 1 à 5, caractérisé en ce que la dent d'encliquetage mobile (45) et la manette (54) sont fixées à un coulisseau (48) qui peut se déplacer radialement, et en particulier forment une seule pièce avec ce dernier.

7. Récipient isolant selon une des revendications 2 à 5, caractérisé en ce que la dent d'encliquetage (63) et la manette (62) sont disposées sur un levier (64) à un bras.

8. Récipient isolant selon une des revendications 1 à 7, caractérisé en ce que la dent d'encliquetage mobile (45, 63) est placée sous l'action de la force d'un ressort en direction de sa position de fermeture.

9. Récipient isolant selon la revendication 8, caractérisé en ce que le flanc de la dent d'encliquetage (45), à l'opposé de la surface d'encliquetage (52, 68) située sur le côté du corps, est chanfreinée.

10. Récipient isolant selon une des revendications 1 à 9, caractérisé en ce qu'une des dents d'encliquetage (44, 45, 61, 63) est disposée sur le côté du couvercle (5) tourné vers le bec (3), le bec (3) est au moins partiellement fermé et la surface d'encliquetage (52) située du côté du corps est formée sur la paroi de couverture (53) du bec fermé (3).

11. Récipient isolant selon une des revendications 1 à 10, caractérisé en ce que le couvercle (5) s'introduit dans l'évidement situé du côté supérieur du corps (2) grâce à une embase (39) qu'il comporte sous lui, les dents d'encliquetage (44, 45, 61, 63) étant disposées sur le pourtour de l'embase (39) et les surfaces d'encliquetage (46, 52, 68) situées du côté du corps (2) formées par des cavités situées dans la paroi (47) de l'évidement (41).

12. Récipient isolant selon une des revendications 1 à 11, caractérisé en ce que le couvercle (5) s'introduit par une embase (39) dans un évidement (41) du corps (2) et est assuré de se trouver dans sa position de fonctionnement grâce à la forme non-ronde de la section horizontale de l'embase (39) et de l'évidement en direction du pourtour.

13. Récipient isolant selon la revendication 12, caractérisé en ce que la forme non-ronde est constituée par au moins une partie plate (60) de la section ronde de l'embase (39) et de l'évidement (41).

14. Récipient isolant selon la revendication 12, caractérisé en ce que la forme non-ronde de l'embase (39) est constituée par une saillie (42) qui est disposée du côté de l'embase (39) tourné vers le bec (3), et limitée par deux surfaces latérales convergeant vers le bec (3) et sur laquelle est disposée une dent d'encliquetage (45, 61) mobile ou fixe.

15. Récipient isolant selon l'une quelconque des revendications 1 à 14, caractérisé en ce que le coulisseau (9) est mis sous tension préalabler par la force d'un ressort (18) en direction de sa position de fermeture, et peut être maintenu dans sa position d'ouverture contre la force du ressort (18) par le mécanisme de réglage (11).

16. Récipient isolant selon la revendications 15, caractérisé en ce que l'organe d'actionnement (36) du mécanisme de réglage (11) est rappelé automatiquement dans sa position de fermeture par un ressort (18).

17. Récipient isolant selon l'une quelconque des revendications 1 à 16, caractérisé en ce que l'organe d'actionnement (36) du mécanisme de réglage (11) fait saillie sur le côté du couvercle (5), que l'organe d'actionnement (36) est disposé au dessus de la poignée (4) et se prolonge jusqu'à la zone d'écart pour le doigt sur la poignée (4) et que l'organe d'actionnement (36) ouvre le coulisseau de fermeture (9) lors de son mouvement approximativement vertical vers l'extérieur.

FIG.1

FIG.2

FIG.3

FIG.5

FIG.6

FIG.4